# EUROPÄISCHE PATENTSCHRIFT

(11) **EP 0 531 276 B1**
(45) Veröffentlichungstag und Bekanntmachung des Hinweises auf die Patenterteilung: **20.03.1996**
(21) Anmeldenummer: 92890173.5
(22) Anmeldetag: 27.07.1992
(51) Int. Cl.: H02G 15/113, H02G 15/013, G02B 6/44

(54) **Kabelmuffe**
Cable sleeve
Manchon de câble

(30) Priorität: 04.09.1991 AT 1747/91
(43) Veröffentlichungstag der Anmeldung: 10.03.1993
(73) Patentinhaber: FELTEN & GUILLEAUME AUSTRIA AG, A-3943 Schrems-Eugenia 1 (AT)
(72) Erfinder: Wittine, Hannes, A-3970 Weitra (AT); Bogg, Walter, A-3841 Kottschallings (AT)
(74) Vertreter: Beer, Manfred, Dipl.-Ing.

(56) Entgegenhaltungen:
- EP-A- 0 073 748
- EP-A- 0 243 222
- DE-A- 2 023 873
- FR-A- 2 080 335
- FR-A- 2 090 148

## Beschreibung

Die Erfindung betrifft eine Muffe für die Aufnahme von Spleißen nachrichtentechnischer Kabel, insbesondere von Lichtwellenleitern oder von elektrischen Leitungen, bestehend aus zwei, vorzugsweise untereinander gleichen, zusammensetzbaren und miteinander verbindbaren Halbschalen aus starrem Werkstoff, insbesondere starrem Kunststoff, wobei an den Stirnflächen der Muffe je wenigstens eine Durchtrittsöffnung für Kabel vorgesehen ist, und wobei zwischen den Halbschalen Dichtungen angeordnet sind, welche Dichtungen in Nuten in den einander zugekehrten Rändern der beiden Halbschalen eingesetzt sind, wobei zwei entlang der Längsränder verlaufende, im wesentlichen langgestreckte Dichtungen und im Bereich der Durchtrittsöffnungen ringförmige Dichtungen vorgesehen sind, wobei die Enden der in den Nuten in den aufeinanderliegenden Rändern der Halbschalen aufgenommenen, langgestreckten Dichtungen im Bereich der Durchtrittsöffnungen querschnittsvergrößerte Köpfe aufweisen, die in entsprechenden, verbreiterten Abschnitten der Nuten aufgenommen sind, und wobei die Enden der langgestreckten Dichtungen durch die ringförmigen Dichtungen, überbrückt sind, die von gegebenenfalls geteilten Kabeleinführungsstutzen gepreßt sind.

Eine derartige Muffe ist aus der EP-A-73 748 bekannt.

Nachteilig bei der Abdichtung bei dieser bekannten Muffe ist es, daß sie vergleichsweise aufwendig herzustellen ist, da die Dichtung ein dreidimensionales Gebilde ist und daß sie nur schwierig in die Muffen eingesetzt werden kann, wenn diese geschlossen werden, insbesondere wenn man bedenkt, daß die Muffen oft unter rauhen Bedingungen auf Baustellen ordnungsgemäß verschlossen und abgedichtet werden sollen.

Der Erfindung liegt die Aufgabe zugrunde eine Kabelmuffe der eingangs genannten Gattung anzugeben, bei der die Dichtung verbessert ist und auch unter erschwerten Bedingungen sicher hergestellt werden kann.

Gelöst wird diese Aufgabe erfindungsgemäß dadurch, daß die Enden der Nuten an den Stirnflächen der Halbschalen neben den Durchtrittsöffnungen münden und daß die Enden der langgestreckten Dichtungen nach außen weisen, und durch die ringförmigen Dichtungen gegen die die Durchtrittsöffnungen umgebenden Stirnflächen der Muffe gepreßt sind.

Auf diese Weise sind für die einzelnen abzudichtenden Bereiche der Muffe voneinander getrennte Dichtungen vorgesehen, die einerseits einfach herzustellen und anderseits einfach zu handhaben sind, wobei jedoch durch die aneinandergrenzenden Dichtungen eine vollkommene Abdichtung der Muffe gewährleistet ist.

Dank der bei der Erfindung vorgesehenen, durchschnittsvergrößerten Köpfe an den Enden der Dichtungen ist einerseits ein vergrößerter Bereich an den Enden der Dichtungen gegeben, wodurch sich eine bessere Abdichtung ergibt, und anderseits ist dadurch ein Verrutschen der Dichtung in der Nut unterbunden.

Bei der Erfindung sind die Enden der langgestreckten Dichtungen durch die ringförmigen Dichtungen verbunden, so daß die Dichtung der Muffe auch an den Stirnflächen durchgehend und zuverlässig erreicht wird.

In einer Ausführungsform der Erfindung kann vorgesehen sein, daß zwischen zwei benachbarten, an einer Stirnfläche angeordneten Durchtrittsöffnungen für Kabel eine im wesentlichen U-förmige Dichtung vorgesehen ist, deren Enden zwischen den Durchtrittsöffnungen nach außen weisen, daß die Enden der Dichtung querschnittsvergrößerte Köpfe aufweisen, die in entsprechenden, verbreiterten Abschnitten der Nuten aufgenommen sind, und daß die der Dichtung durch die ringförmigen Dichtungen, die von den Kabeleinführungsstutzen gegen die die Durchtrittsöffnungen umgebende Stirnfläche der Muffe gepreßt sind, mit nach außen weisenden Enden der langgestreckten Dichtungen überbrückt sind. Durch diese Maßnahme ist die Dichtheit der Muffe im Bereich ihrer Stirnfläche auch gewährleistet, wenn dort zwei Durchtrittsöffnungen vorgesehen sind.

Um das Einlegen der ringförmigen Dichtung an den Kabeleinführungsstutzen zu erleichtern und die Abdichtung zwischen den Kabeleinführungsstutzen und der Muffe zu verbessern, kann gemäß einer Weiterbildung der Erfindung vorgesehen sein, daß die den Stirnflächen zugekehrten Flansche der Kabeleinführungsstutzen zwei zueinander konzentrische, kreisrunde Rippen aufweisen, zwischen welchen die ringförmigen Dichtungen aufgenommen sind.

Wenn gemäß einer Weiberbildung der Erfindung zwischen den Rippen eine weitere Rippe mit geringerer Höhe und mit kreisrunder Form vorgesehen ist, die von außen gegen die ringförmige Dichtung drückt, dann wird die Dichtung zwischen den Kabeleinführungsstutzen und der Muffe weiter verbessert.

Um zu verhindern, daß die Kabeleinführungsstutzen ungewollt gegenüber der Muffe verdreht werden können, ist gemäß einer bevorzugten Ausführungsform der Erfindung vorgesehen, daß an der der Muffe zugekehrten Fläche des Kabeleinführungsstutzens vorzugsweise zwei nasenartige Vorsprünge vorgesehen sind, die entsprechende, nach innen offene Ausnehmungen in den Dichtungen durchsetzend, in Ausnehmungen in den Stirnflächen der Muffe eingreifen.

Die Qualität der Abdichtung und die Einfachheit des Einlegens der Dichtungen kann gemäß einer Weiterbildung der Erfindung dadurch verbessert werden, daß die Köpfe der Dichtungen außen einen vorspringenden Rand aufweisen.

Eine vorteilhaftl Ausführungsform der Dichtungen ist gegeben, wenn die Dichtungsschnüre zwischen den Köpfen der Dichtungen eine von gekrümmten Linien umgrenzte, sternförmige Querschnittsform aufweisen.

Wenn gemäß einer Ausführungsform der Erfindung zur Verbindung der Halbschalen der Muffe im Bereich der Ränder derselben von Verbindungsschrauben durchsetzte Öffnungen vorgesehen sind, wobei in einer der Halbschale Muttern eingegossen und durch die Öffnungen in der anderen Halbschale die Verbindungsschrauben gesteckt sind, welche in die eingegossenen Muttern eingeschraubt sind, dann können die Halbschalen der Muffen einfach, schnell und sicher miteinander verbunden werden.

Um auch jene Bereiche der Trennfläche der Halbschalen sicher abzudichten, in denen die Verbindungsschrauben vorgesehen sind, kann gemäß einer Weiterbildung der Erfindung vorgesehen sein, daß die Öffnung für die Eingießmutter ein Sackloch ist, und daß die Öffnung für die Verbindungsschraube eine Durchgangsöffnung ist, die auf der von der anderen Halbschale abgewandten Seite durch einen Verschlußstopfen verschließbar ist.

Weiters kann mit ähnlichem Ziel noch vorgesehen sein, daß sämtliche Löcher für Verbindungsschrauben außerhalb der Dichtungen angeordnet sind.

Wenn gemäß einer Ausführungsform der Erfindung vorgesehen ist, daß zum Verschließen nicht benützter Kabeleinführungsöffnungen Flansche vorgesehen sind, wobei jeder Flansch so ausgebildet ist wie der Flansch der Kabeleinführungsstutzen, dann können auch nicht benutzte Kabeleinführungsöffnungen einfach und sicher verschlossen werden.

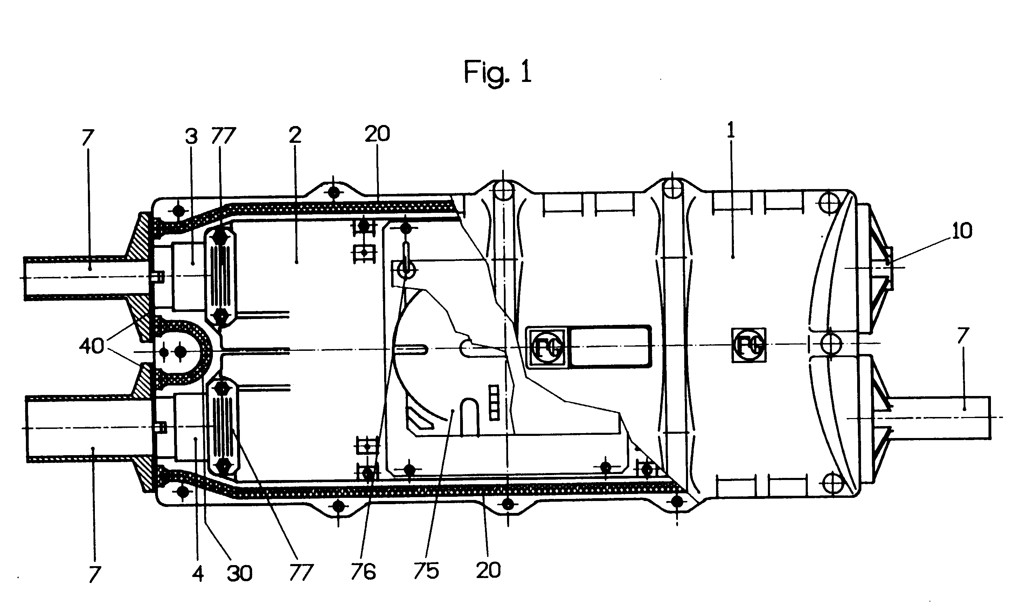

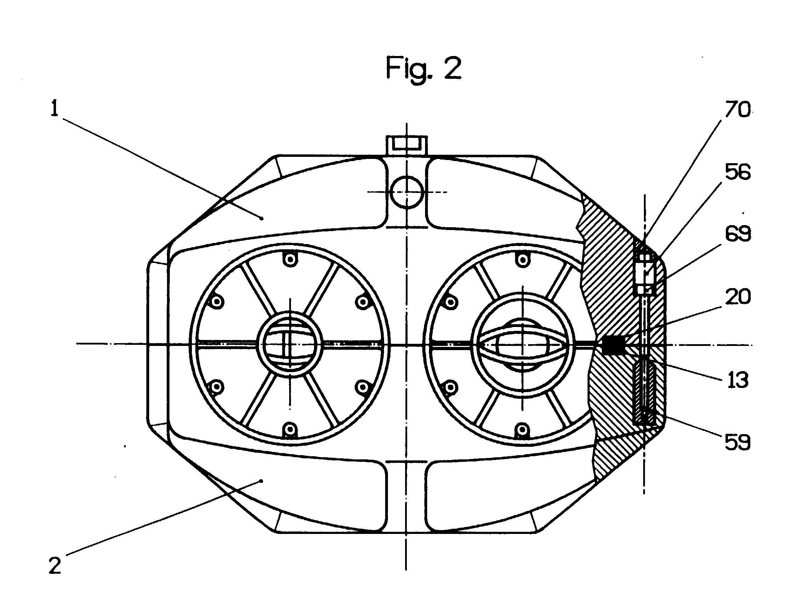

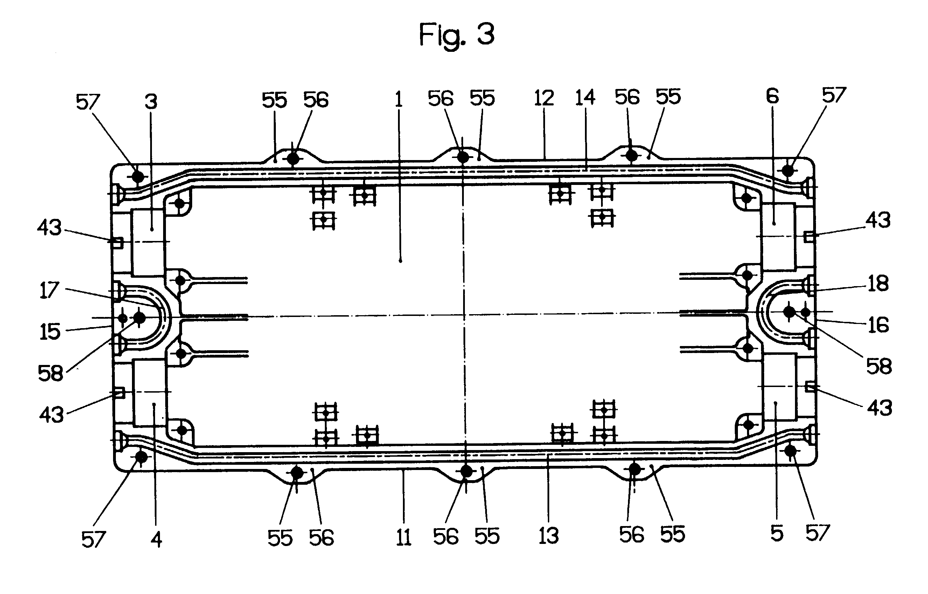

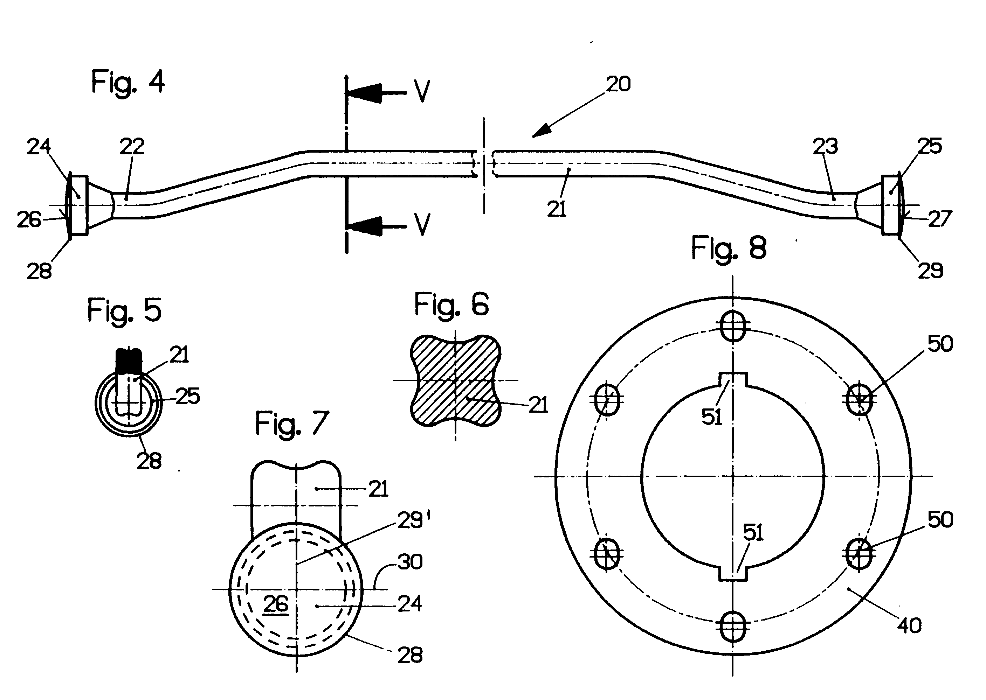

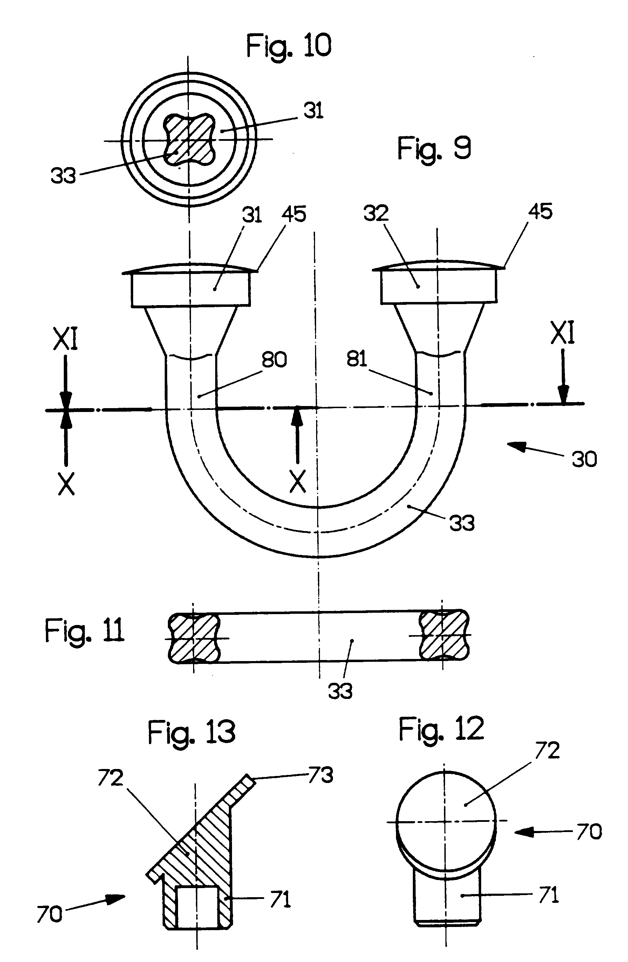

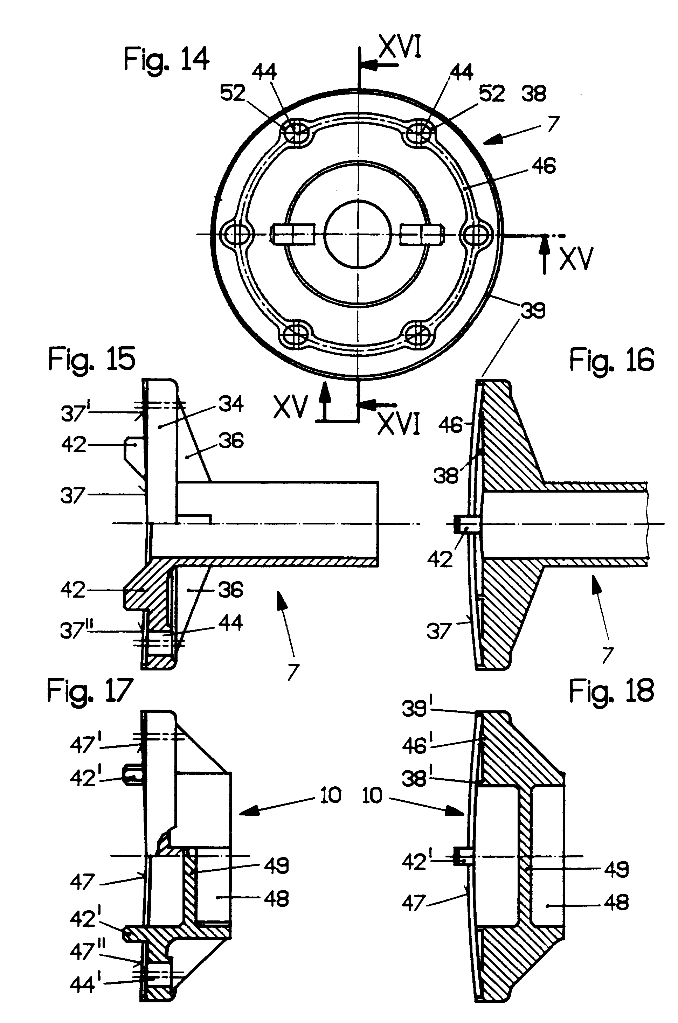

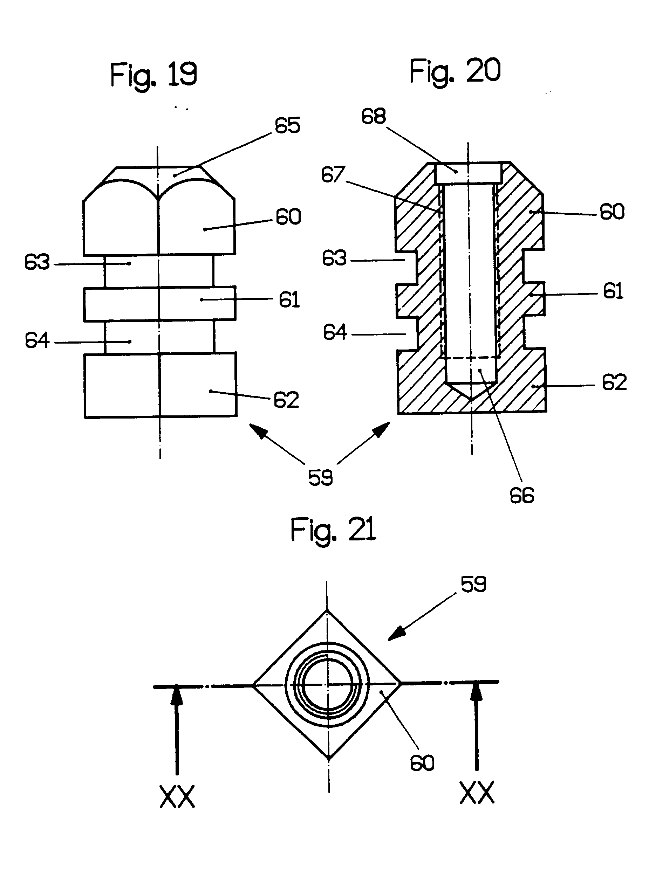

Weitere Vorteile der Erfindung ergeben sich aus der folgenden Beschreibung eines Ausführungsbeispiels einer erfindungsgmäßen Muffe unter Bezugnahme auf die Zeichnungen. Es zeigt Fig. 1 eine Draufsicht auf die erfindungsgemäße Muffe, wobei die obere Halbschale teilweise ausgebrochen ist, Fig. 2 eine Ansicht der Muffe von Fig. 1 von links, die ebenfalls teilweise ausgenbrochen ist, Fig. 3 eine Draufsicht auf eine Halbschale gemäß Fig. 1, Fig. 4 eine Ausführungsform einer langgestreckten Dichtung, Fig. 5 einen Schnitt durch die Dichtung von Fig. 4 entlang der Linie V-V, Fig. 6 den Querschnitt der Dichtungsschur von Fig. 4 in vergrößertem Maßstab, Fig. 7 eine Ansicht auf die Dichtung von Fig. 4 von links, Fig. 8 eine Ausführungsform einer ringförmigen Dichtung, Fig. 9 eine Ausführungsform einer U-förmigen Dichtung, Fig. 10 einen Schnitt durch die Dichtung von Fig. 9 entlang der Linie X-X, Fig. 11 einen Schnitt durch die Dichvon Fig. 9 entlang der Linie XI-XI, Fig. 12 einen Verschlußstopfen für eine Öffnung für eine Verbindungsschraube, Fig. 13 einen Längsschnitt durch den Verschlußstopfen von Fig. 12, Fig. 14 eine Ansicht einer Ausführungsform eines Kabeleinführungsstutzens, Fig. 15 einen Teilschnitt durch den Gegenstand von Fig. 14 entlang der Linie XV-XV, Fig. 16 einen Schnitt durch den Gegenstand von Fig. 14 entlang der Linie XVI-XVI, Fig. 17 und Fig. 18 Schnitte durch einen Verschlußflansch, wobei die Schnitte von Fig. 17 bzw. Fig. 18 entsprechend den Schnitten des Kabeleinführungsstutzens gemäß Fig. 15 bzw. 16 verlaufen, Fig. 19 eine Eingießmutter, Fig. 20 einen Längsschnitt durch die Eingießmutter von Fig. 19, Fig. 21 eine Draufsicht auf die Eingießmutter von Fig. 19 und die Fig. 23 bis 25 einen geteilten Kabeleinführungsstutzen.

In Fig. 1 ist eine erfindungsgemäße Muffe dargestellt, die eine untere Halbschale 1 und eine obere Halbschale 2, die in der Darstellung von Fig. 1 teilweise weggebrochen ist, aufweist. Die Muffe, deren untere Halbschale 1 in Fig. 3 in vergrößertem Maßstab näher dargestellt ist, weist vier Durchtrittsöffnungen 3 bis 6 für Kabel auf, die durch die beiden Halbschalen 1 und 2 begrenzt werden. An dieser Stelle ist darauf hinzuweisen, daß die erfindungsgemäße Muffe auch in einer Ausführungsform verwirklicht sein kann, die an jedem Ende nur eine Kabeldurchtrittsöffnung besitzt. Weiters kann die erfindungsgemäße Muffe an einem Ende eine Kabeldurchtrittsöffnung und am anderen Ende zwei Kabeldurchtrittsöffnungen aufweisen. Diese Muffe ist z.B. als "Abzweigmuffe" verwendbar.

An den Durchtrittsöffnungen 3, 4 und 5 sind Kabeleinführugsstutzen 7, 8 und 9 und an der Durchtrittsöffnung 6 ist ein Verschlußflansch 10 (Fig. 17, 18) angeordnet. Die Halbschale 1 und die vorzugsweise mit ihr identisch ausgebildete Halbschale 2 weisen an ihren Längsrändern 11 und 12 Nuten 13 und 14 auf, die an den Stirnseiten 15 und 16 der Halbschalen 1 und 2 münden. An den Stirnseiten 15, 16 sind weiters jeweils zwischen den benachbarten Durchtrittsöffnungen 3 und 4 bzw. 5 und 6 U-förmige Nuten 17 bzw. 18 vorgesehen, deren Enden ebenfalls an den jeweiligen Stirnseiten 15, 16 enden.

Die Nuten 13, 14 und 17, 18 weisen einen etwa rechteckförmigen Querschnitt auf, der sich an den Enden der Nuten, d.h. and den Stirnflächen 15, 16, zu einem halbkreisförmigen Querschnitt erweitert. In die Nuten 13, 14 an den Längsseiten 12, 13 der Halbschalen 1 und 2 werden langgestreckte Dichtungen 20 eingelegt, die beispielsweise die in den Fig. 4 bis 7 dargestellte Form aufweisen können.

Die Dichtung 20 ist eine langgestreckte Dichtungsschnur 21, die einen in den Fig. 5 und 6 dargestellten, von gekrümmten Linien umgrenzten, sternförmigen Querschnitt besitzt. In ihren Endbereichen 22, 23 kann die Dichtung 20 eine dem Verlauf der Nuten 13, 14 entsprechende, schwach gekröpfte Form aufweisen.

An ihren beiden Enden 22, 23 weist die Dichtung 20 verbreiterte Köpfe 24, 25 mit kreisförmigem Querschnitt auf, deren Stirnflächen 26, 27 kugelabschnittförmig ausgebildet sind und außenseitig einen vorspringenden Rand 28, 29 aufweisen. Die Köpfe 24, 25 können auch einen elliptischen Querschnitt aufweisen, sodaß der Durchmesser des Kopfes 24, 25, an der Achse 29′ in Fig. 7 gemessen, etwas größer ist als der an der Achse 30 gemessene Durchmesser. Dies hat den Vorteil, daß der Kopf 24, 25, nachdem er zwischen den Halbschalen 1, 2 etwas zusammengedrückt wurde, eine schließlich kreisrunde Querschnittsform aufweist.

Werden die unter Bezugnahme auf die Fig. 4 bis 7 näher beschriebenen, langgestreckten Dichtungen 20 in die Nuten 13 und 14 der Halbschalen 1, 2 eingelegt, dann kommen die Köpfe 24, 25 in den entsprechenden verbreiterten Ausnehmungen am Ende der Nuten 13, 14 zu liegen und die Ränder 28, 29 der Köpfe 24, 25 sowie die kugelabschnittförmigen Flächen 26, 27 stehen an den Stirnflächen 15, 16 der Halbschalen 1, 2 etwas vor. Durch die beschriebene Ausführung der Dichtungen 20 können diese auf einfache Weise in die Nuten 13, 14 eingelegt werden und sind gegen Verdrehen oder Verrutschen in diesen auf einfache Weise gesichert. Durch die verbreiterte Ausführung der Köpfe 24, 25 gegenüber der Dichtungsschnur 21 ist außerdem eine, in der Folge noch zu beschreibende, verbesserte Abdichtung der Muffe gegeben.

Unter Bezugnahme auf die Fig. 9, 10 und 11 wird eine U-förmige Dichtung 30 beschrieben, die Köpfe 31, 32 aufweist, die eine Form haben, die der Form der Köpfe 24, 25 der Dichtungen 20 entspricht. Die Dichtung 30 weist zwischen den Kipfen 31, 32 eine Dichtungsschnur 33 auf, die ebenfalls eine von gekrümmten Linien umgrenzte, sternförmige Querschnittsform aufweist. Die Dichtungen 30 der in Verbindung mit den Fig. 9 bis 11 beschriebenen Form werden in die Nuten 17 und 18 an den Stirnseiten 15 und 16 der Halbschale 1 eingelegt und sind durch ihre Form ebenfalls gegen Verrutschen gesichert.

Die Kabel, deren Leitungen bzw. Lichtwellenleiter in der Muffe durch Spleiße verbunden sind, werden durch Kabeleinführungsstutzen 7, 8, 9 an den Durchtrittsöffnungen, in Fig. 1 z.B. den Durchtrittsöffnungen 3, 4 und 5, radial festgelegt bzw. durch die Kabeleinführungsstutzen 7 gegenüber den Durchtrittsöffnungen 3, 4, 5 zentriert. Eine beispielsweise Ausführungsform eines Kabeleinführungsstutzens 7, 8, 9 ist anhand des Kabeleinführungsstutzens 7 in den Fig. 14 bis 16 dargestellt. Der Kabeleinführungsstutzen 7 besteht im wesentlichen aus einem Flansch 34 und einem daran einstückig angeformten Stutzen 35. Zur Versteifung dieser Anordnung können vorzugsweise sechs gleichmäßig über den Umfang verteilt angeordnete Versteifungsrippen 36 vorgesehen sein.

Die Stirnfläche 37 am Flansch 34, mit welcher der Kabeleinführungsstutzen 7 an den Stirnseiten 15, 16 der Halbschalen 1, 2 anliegt, weist zwei konzentrische Rippen 38, 39 auf, zwischen welchen die in Fig. 8 dargestellte ringförmige Dichtung 40 aufgenommen ist. Zwischen den konzentrischen Rippen 38, 39 ist eine weitere Rippe 46 angeordnet, die zu den Rippen 38, 39 konzentrisch ist, jedoch eine geringere Höhe als diese aufweist. Durch diese Rippe 46 wird eine ringförmige Dichtung 40 gegen die Stirnflächen 15, 16 der Halbschalen 1, 2 gedrückt.

Der Kabeleinführungsstutzen 7 weist an seiner Stirnfläche 37 zwei nasenartige Vorsprünge 42, 43 auf, die einander bezüglich der Längsache des Kabeleinführungsstutzens 7 diametral gegenüberliegen. An den Durchtrittsöffnungen 3 bis 6 befinden sich den Vorsprüngen 42 entsprechende Ausnehmungen 43, in welche die Vorsprünge 42 eingreifen, wenn der Kabeleinführungsstutzen 7 an der Muffe befestigt wird, wodurch ein Verdrehen oder Verrutschen des Kabeleinführungsstutzens 7 gegenüber der Muffe verhindert ist.

Zur Befestigung der Kabeleinführungsstutzen an der Muffe sind am Flansch 34 zwischen den Versteifungsrippen 36 vorzugsweise sechs Bohrungen 44 vorgesehen. Diese Bohrungen 44 sind langlochartig ausgeführt, wobei sich die Langlöcher vertikal zur Teilungsebene zwischen den Halbschalen 1, 2 erstrecken, wenn der Kabeleinführungsstutzen 7 an der Muffe befestigt ist. Durch diese langlochartige Ausführung der Bohrungen 44 kann ein unterschiedlicher Abstand der Halbschalen 1 und 2 voneinander in der zusammengebauten Muffe ausgeglichen werden. Der unterschiedliche Abstand der beiden Halbschalen 1 und 2 voneinander kann dadurch entstehen, daß die Dichtungen 20 und 30 beim Zusammenbau der Muffe nicht immer gleich weit zusammengedrückt werden.

Den Bohrungen 44 sind nicht dargestellte Bohrungen in den Halbschalen 1 und 2 zugeordnet, in welche durch die Bohrung 44 ragende Schrauben eingedreht werden können.

In den Fig. 17 und 18 ist ein Flansch 10 dargestellt, der zum Verschließen von nicht benötigten Durchtrittsöffnungen 3, 4, 5, 6 wie z.B. der Durchtrittsöffnung 6 in Fig. 1 dient. Dieser Flansch 10 weist im wesentlichen die gleiche Form wie der Flansch 34 des Kabeleinführungsstutzens 7 auf, d.h. er weist konzentrische Rippen 38′, 39′, 46′ auf, wobei zwischen den Rippen 38′ und 39′ eine ringförmige Dichtung 40 aufgenommen werden kann, die von der Rippe 46′ gegen die Stirnseite 16 der Halbschalen 1, 2 gedrückt wird. Weiters weist der Flansch 10 nasenartige Vorsprünge 42′ auf, die mit Ausnehmungen 43 in der Durchtrittsöffnung 6 zusammenwirken und den Flansch 10 gegen Verdrehen sichern. Weiters weist der Flansch 10 langlochartige Bohrungen 44′ auf, durch die Schrauben greifen, mit denen er an der Stirnfläche 16 befestigbar ist.

Im Unterschied zu den Kabeleinführungsstutzen 7 bis 9 weist der Flansch 10 nur einen kurzen, rohrförmigen Stutzen 48 auf, der durch eine Wand 49 verschlossen ist. Somit ist die Durchtrittsöffnung 6 durch den Flansch 10 vollständig verschließbar.

Bei den in den Fig. 15 und 16 bzw. 17 und 18 dargestellten Ausführungsformen eines Kabeleinführungsstutzens 7 bzw. eines Verschlußflansches 10 ist die Stirnfläche 37 bzw. 47 nicht eben, sondern die Stirnfläche 37 bzw. 47 ist, wie insbesondere aus den Fig. 15 und 17 ersichtlich ist, gewinkelt, sodaß zwei zueinander geneigte Teilstirnflächen 37', 37'' bzw. 47', 47'' gebildet werden, deren Schnittlinie die Längsachse des Kabeleinführungsstutzens 7 bzw. des Verschlußflansches 10 schneidet. Dadurch kann einer entsprechenden Schrägstellung der Stirnflächen 15, 16 der Halbschalen 1, 2 zueinander Rechnung getragen werden, die aus fertigungstechnischen Gründen bei der Herstellung der Halbschalen 1, 2 von Vorteil ist. Es wäre auch denkbar, die Stirnflächen 15, 16 im rechten Winkel zur Teilungsebene zwischen den Halbschalen 1 und 2 anzuordnen und, abgesehen von den vorstehenden konzentrischen Rippen 38, 38', 39, 39', 46, 46', eine vollkommen ebene Stirnfläche 37 bzw. 47 am Kabeleinführungsstutzen 35 bzw. am Verschlußflansch 10 vorzusehen.

Die Bohrungen 44, 44' weisen von der Längsachse des Kabeleinführungsstutzens 7 bzw. des Verschlußflansches 10 einen Radialabstand auf, der im wesentlichen dem mittleren Radius der Rippe 46, 46' entspricht. Um zu verhindern, daß die Rippe 46, 46' durch die Bohrungen 44, 44' unterbrochen wird, weist die Rippe 46, 46' Verbreiterungen 52' auf, sodaß die Bohrungen 44, 44' vollständig umschlossen sind und die Rippe 46, 46' nicht unterbrochen wird. In Fig. 8 ist eine ringförmige Dichtung 40 gezeigt, die den Kabeleinführungsstutzen 7 bis 9 bzw. dem Verschlußflansch 10 entsprechende langlochähnliche Bohrungen 50 sowie zwei Ausnehmungen 51 für die nasenförmigen Ansätze 42, 42' des Kabeleinführungsstutzens 7 aufweist. Die ringförmige Dichtung 40 ist scheibenförmig mit einer Dicke ausgebildet, die größer ist als die Höhenunterschiede zwischen der mittleren Rippe 46, 46' und den äußeren Rippen 38, 38' bzw. 39, 39' am Kabeleinführungssstutzen 7 bzw. am Verschlußflansch 10, wodurch eine sichere Abdichtung gewährleistet ist.

Um die beiden Halbschalen 1, 2 miteinander zu verbinden, weisen diese an ihren Längsrändern jeweils drei Vorsprünge 55 auf, in welchen Bohrungen 56 für Schrauben vorgesehen sind. Weiters weisen die Halbschalen 1, 2 noch Bohrungen 57 in den Ecken und zwei weitere Bohrungen 58 auf, welche zwischen den Nuten 17, 18 für die U-förmigen Dichtungen 30 aufgenommen sind. Die Halbschalen 1 und 2 sind im wesentlichen identisch, unterscheiden sich jedoch voneinander dadurch, daß die Bohrungen 56 bis 58 in einer Halbschale 1 oder 2 Durchgangsbohrungen sind und in der anderen Halbschale 2 oder 1 Sacklochbohrungen sind, in die Eingießmuttern 59 eingegossen sind.

Eine bevorzugte Ausführungsform einer solchen Mutter 59 ist in den Fig. 19 bis 21 dargestellt. Die Mutter 59 mit einem im wesentlichen quadratischen Querschnitt weist einen Oberteil 60, einen Mittelteil 61 und einen Unterteil 62 auf. Der Mittelteil 61 und der Oberteil 60 bzw. der Unterteil 62 sind durch eine umlaufende Rille 63 bzw. 64 voneinander getrennt. Der Oberteil 60 weist weiters noch eine etwa 45° abgeschrägt Fase 65 auf.

In der Mutter 59 ist eine Sacklochbohrung 66 mit einem Gewinde 67 und einer Verbreiterung 68 an der Öffnung vorgesehen.

Durch die quadratische Form des Oberteils 60, des Mittelteils 61 und des Unterteils 62 ist die Mutter 59 im eingegossenen Zustand gegen Verdrehen und durch die Fase 65 und die Rillen 63 und 64 gegen Herausziehen aus der Halbschale 1 oder 2 gesichert.

In Fig. 2 ist dargestellt, wie die Mutter 59 in der unteren Halbschale 2 eingegossen ist, und die obere Halbschale 1 über eine Schraube 69, die durch die abgesetzte Durchgangsbohrung 56 in der oberen Halbschale 1 geführt und in die Mutter 59 eingedreht ist, mit der unteren Halbschale 2 verbunden ist.

Um die Durchgangsbohrung 56 nach außen abzudichten, kann diese durch einen Verschlußstopfen 70 verschlossen werden, der einen hohlzylindrischen Schaft 71 und einen entsprechend der Oberfläche der Halbschale 1 geneigten und mit einem Rand 73 versehenen Kopf 72 aufweist.

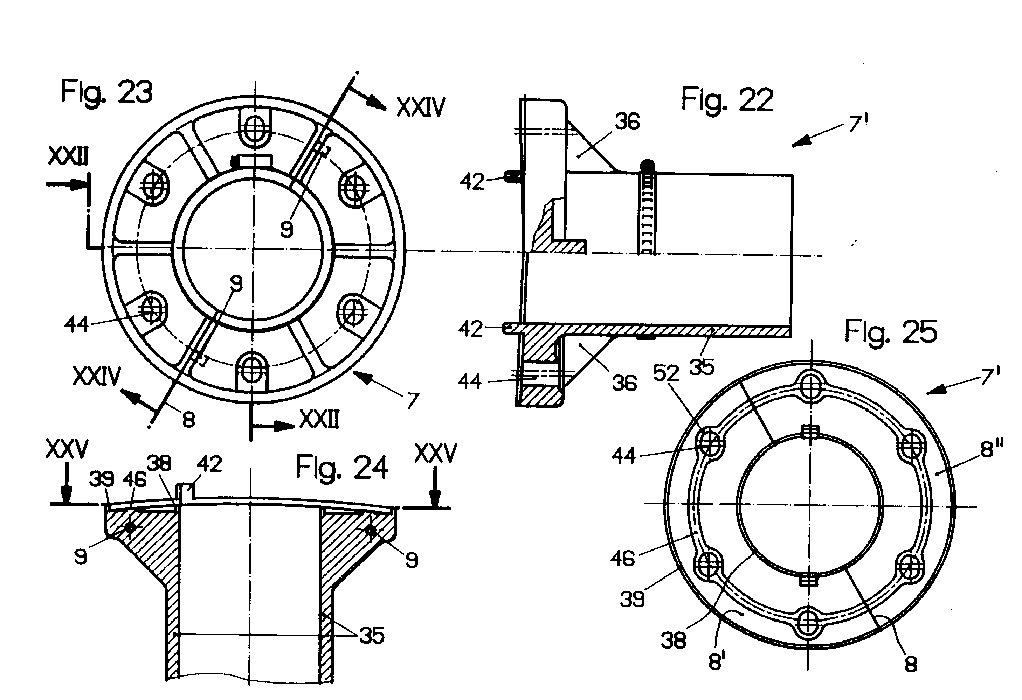

In den Fig. 23 bis 25 ist eine Ausführungsform eines Kabeleinführungsstutzens 7' gezeigt, der im wesentlichen so wie der Kabeleinführungsstutzen 7 aufgebaut ist. Die Besonderheit des Kabeleinführungsstutzens 7' besteht darin, daß er längs der Axialebene 8 in zwei Hälften 8' und 8" geteilt ist, so daß er auch für ungeschnittene Kabel verwendet werden kann. Die Lage der Hälften 8' und 8" zueinander wird durch von einer Hälfte 8 vorstehende und in Vertiefungen in der anderen Hälfte eingreifende Stifte 9 gesichert. Zusätzlich kann - wenigstens bis zum Anschrumpfen des Schrumpfschlauches, ein Schlauchbinder (Fig. 22) od. dgl. verwendet werden, um die Hälften 8' und 8" zusammenzuhalten.

Der Zusammenbau der erfindungsgemäßen Muffe erfolgt unter Bezugnahme auf Fig. 1 wie folgt:

Zuerst werden die Kabeleinführungsstutzen 7 mit Dichtungen über die nicht dargestellten Kabel geschoben und anschließend die Spleiße der elektrischen Leitungen oder der Lichtwellenleiter hergestellt. Die einzelnen Spleiße können z.B. in Taschen oder Trägern 75 aufgenommen sein, die über Aufhänger 76 gehängt sind. Anschließend werden die Kabel über Zugentlastungsschellen 77 in der Muffe (der Halbschale 2) festgelegt.

Nach diesem Arbeitsschritt werden die Dichtungen 20, 30 einfach in die entsprechenden Nuten 13, 14 bzw. 17, 18 eingelegt, wo sie durch ihre Köpfe 24, 25 bzw. 31, 32 gegen Verrutschen gesichert sind. In der Folge wird die obere Halbschale 1 fluchtend auf die untere Halbschale 2 gelegt, wobei die Dichtungen 20, 30 auch in den Nuten 13, 14 bzw. 17, 18 der oberen Halbschale 1 aufgenommen werden, und über Schrauben 69 an der unteren Halbschale 2 befestigt. Anschließend werden die Durchgangslöcher 56 bis 58 mit Verschlußstopfen 70 verschlossen.

Nun werden die Kabeleinführungsstutzen 7 bis 9 entlang der Kabel, welche durch die Durchtrittsöffnungen 3, 4 und 5, 6 aus der Muffe nach außen geführt sind, bis in Anlage an die Stirnenden dieser verschoben und über Schrauben durch die Bohrungen 44 an den Halbschalen 1, 2 der Muffe festgeschraubt. Dazu können in den Halbschalen 1, 2 auch im Bereich der Durchtrittsöffnungen 3 bis 6 die vorhin beschriebenen Muttern 59 eingegossen sein.

Wenn die Kabeleinführungsstutzen 7 bis 9 an den Halbschalen 1, 2 festgeschraubt werden, werden die ringförmigen Dichtungen 40, die zwischen den Rillen 38 und 39 an den Stirnflächen 37 der Kabeleinführungsstutzen 7 bis 9 aufgenommen sind, von den Rippen 46 unterstützt einerseits gegen die Halbschalen 1, 2 und anderseits gegen die Köpfe 24 und 25 der langgestreckten Dichtungen 20 bzw. die Köpfe 31, 32 der U-förmigen Dichtungen 30 gepreßt, wodurch sowohl die Halbschalen 1 und 2 gegeneinander als auch die Kabeleinführungsstutzen 7 bis 9 gegen die Halbschalen 1 und 2 vollständig abgedichtet sind. Dies gilt auch im Bereich des Dichtungsflansches 10, der wie vorhin beschrieben, an der Durchtrittsöffnung 6 festgeschraubt wird, so daß auch diese vollständig abgedichtet ist.

Zum Schluß werden die Kabeleinführungsstutzen 7 gegenüber den Kabeln abgedichtet, was z.B. durch unter Wärmeeinwirkung schrumpfende Schläuche, die bereits vor der beschriebenen Montage auf die Kabel bzw. die Kabeleinführungsstutzen 7 aufgeschoben wurden, durchgeführt werden kann.

Es ist ersichtlich, daß durch die Erfindung eine Muffe angegeben ist, die bei der Montage auf sehr einfach Weise und dicht zusammengebaut werden kann.

Abänderungen der beschriebenen Ausführungsformen sind im Rahmen der Ansprüche z.B. insoweit möglich, als nur an einem Stirnende der Muffe zwei Durchtrittsöffnungen für Kabel vorgesehen sein können, bzw. eine Durchtrittsöffnung für ein Kabel jeweils an einem Stirnende vorgesehen sein kann. Es ist ersichtlich, daß bei dieser letztgenannten Ausführungsform keine U-förmigen Dichtungen 30 erforderlich sind, sondern daß zwei langgestreckte Dichtungen benötigt werden, welche eine der Umrißform der Halbschalen entsprechende Form aufweisen und deren Köpfe wie die Köpfe der beschriebenen langgestreckten Dichtungen 20 an den Stirnflächen 15 und 16 in entsprechend ausgebildeten Nuten enden.

Eine bevorzugte Ausführungsform der in Anspruch 1 beschriebenen Muffe für die Aufnahme von Kabelspleissen besteht aus zwei miteinander verbundenen Halbschalen 1 und 2. Die von den Halbschalen 1 und 2 gebildete Muffe besitzt an ihren Stirnflächen Durchgangsöffnungen für die in die Muffe hineinführenden Kabel, wobei an den Durchtrittsöffnungen Kabeleinführungsstutzen 7 oder Verschlußkappen 10 befestigt sind.

Zum Abdichten der beiden Halbschalen 1 und 2 im Bereich der aufeinander liegenden Ränder derselben sind an den Längsseitenrändern der Halbschalen langgestreckte Dichtungen 20 und im Bereich zwischen an einer Stirnfläche nebeneinander vorgesehenen Durchtrittsöffnungen für die Kabel U-förmige Dichtungen 30 vorgesehen. Die in entsprechende Nuten in die Halbschalen eingesetzte Dichtungen 20 und 30 besitzen verbreiterte Köpfe, die im Bereich der Stirnflächen der Halbschalen 1 und 2 liegen. Dabei werden die Enden der Köpfe miteinander durch ringförmige Dichtungen, die zwischen den Kabeleinführungstutzen 7 und den Stirnflächen der Muffe vorgesehen sind, überbrückt. So ist eine ringsum vollständige Dichtung der Muffe nach außen hin gewährleistet.

## Patentansprüche

1. Muffe für die Aufnahme von Spleißen nachrichtentechnischer Kabel, insbesondere von Lichtwellenleitern oder von elektrischen Leitungen, bestehend aus zwei, vorzugsweise untereinander gleichen, zusammensetzbaren und miteinander verbindbaren Halbschalen (1, 2) aus starrem Werkstoff, insbesondere starrem Kunststoff, wobei an den Stirnflächen (15, 16) der Muffe je wenigstens eine Durchtrittsöffnung (3, 4, 5, 6) für Kabel vorgesehen ist, und wobei zwischen den Halbschalen (1, 2) Dichtungen (20, 30) angeordnet sind, welche Dichtungen (20, 30) in Nuten (13, 14, 17, 18) in den einander zugekehrten Rändern der beiden Halbschalen (1, 2) eingesetzt sind, wobei zwei entlang der Längsränder (11, 12) verlaufende, im wesentlichen langgestreckte Dichtungen (20) und im Bereich der Durchtrittsöffnungen (3, 4, 5, 6) ringförmige Dichtungen (40) vorgesehen sind, wobei die Enden (22, 23, 80, 81) der in den Nuten (13, 14) in den aufeinanderliegenden Rändern der Halbschalen (1, 2) aufgenommenen, langgestreckten Dichtungen (20) im Bereich der Durchtrittsöffnungen (3, 4, 5, 6) querschnittsvergrößerte Köpfe (24, 25, 31, 32) aufweisen, die in entsprechenden, verbreiterten Abschnitten der Nuten (13, 14, 17, 18) aufgenommen sind, und wobei die Enden (22, 23, 80, 81) der langgestreckten Dichtungen (20) durch die ringförmigen Dichtungen (40), überbrückt sind, die von gegebenenfalls geteilten Kabeleinführungsstutzen (7, 7') gepreßt sind, dadurch gekennzeichnet, daß die Enden der Nuten (13, 14) an den Stirnflächen (15, 16) der Halbschalen (1, 2) neben den Durchtrittsöffnungen (3, 4, 5, 6) münden und daß die Enden (22, 23, 80, 81) der langgestreckten Dichtungen (20, 30) nach außen weisen, und durch die ringförmigen Dichtungen (40) gegen die die Durchtriffsöffnungen (3, 4, 5, 6) umgebenden Stirnflächen (15, 16) der Muffe gepreßt sind.

2. Muffe nach Anspruch 1, dadurch gekennzeichnet, daß zwischen zwei benachbarten, an einer Stirnfläche (15, 16) angeordneten Durchtrittsöffnungen (3, 4, 5, 6) für Kabel eine im wesentlichen U-förmige Dichtung (30) vorgesehen ist, deren Enden (80, 81) zwischen den Durchtrittsöffnungen (3, 4, 5, 6) nach außen weisen, daß die Enden (80, 81) der Dichtung (30) querschnittsvergrößerte Köpfe (31, 32) aufweisen, die in entsprechenden, verbreiterten Abschnitten der Nuten (17, 18) aufgenommen sind, und daß die Enden (80, 81) der Dichtung (30) durch die ringförmigen Dichtungen (40), die von den Kabeleinführungsstutzen (7, 8, 9) gegen die die Durchtrittsöffnungen (3, 4, 5, 6) umgebende Stirnfläche (15, 16) der Muffe gepreßt sind, mit nach außen weisenden Enden (22, 23) der langgestreckten Dichtungen (20) überbrückt sind.

3. Muffe nach Anspruch 1 oder 2, dadurch gekennzeichnet, daß die den Stirnflächen (15, 16) zugekehrten Flansche der Kabeleinführungsstutzen (7) zwei zueinander konzentrische, kreisrunde Rippen (38, 39) aufweisen, zwischen welchen die ringförmigen Dichtungen (40) aufgenommen sind.

4. Muffe nach Anspruch 3, dadurch gekennzeichnet, daß zwischen den Rippen (38, 39) eine weitere Rippe (46) mit geringerer Höhe und mit kreisrunder Form vorgesehen ist, die von außen gegen die ringförmige Dichtung (40) drückt.

5. Muffe nach einem der Ansprüche 1 bis 4, dadurch gekennzeichnet, daß an der der Muffe zugekehrten Fläche (37) des Kabeleinführungsstutzens (7) vorzugsweise zwei nasenartige Vorsprünge (42) vorgesehen sind, die entsprechende, nach innen offene Ausnehmungen (51) in den Dichtungen (40) durchsetzend, in Ausnehmungen (43) in den Stirnflächen (15, 16) der Muffe eingreifen.

6. Muffe nach einem der Ansprüche 1 bis 5, dadurch gekennzeichnet,daß die Köpfe (24, 25, 31, 32) der Dichtungen (20, 30) außen einen vorspringenden Rand (28, 45) aufweisen.

7. Muffe nach einem der Anprüche 1 bis 6, dadurch gekennzeichnet, daß die Dichtungsschnüre (21, 33) zwischen den Köpfen (24, 25, 31, 32) der Dichtungen (20, 30) eine von gekrümmten Linien umgrenzte, sternförmige Querschnittsform aufweisen.

8. Muffe nach einem der Ansprüche 1 bis 7, dadurch gekennzeichnet, daß zur Verbindung der Halbschalen (1, 2) der Muffe im Bereich der Ränder derselben von Verbindungsschrauben (69) durchsetzte Öffnungen (56, 57, 58) vorgesehen sind, wobei in einer der Halbschalen (1, 2) Muttern (59) eingegossen und durch die Öffnungen (56, 57, 58) in der anderen Halbschale (2, 1) die Verbindungsschrauben (69) gesteckt sind, welche in die eingegossenen Muttern (59) eingeschraubt sind.

9. Muffe nach Anspruch 8, dadurch gekennzeichnet, daß die Öffnung für die Eingießmutter (59) ein Sackloch ist, und daß die Öffnung (56, 57, 58) für die Verbindungsschraube (69) eine Durchgangsöffnung ist, die auf der von der anderen Halbschale abgewandten Seite durch einen Verschlußstopfen (70) verschließbar ist.

10. Muffe nach einem der Ansprüche 1 bis 9, dadurch gekennzeichnet, daß sämtliche Löcher (56, 57, 58) für Verbindungsschrauben (69) außerhalb der Dichtungen (20, 30) angeordnet sind.

11. Muffe nach einem der Ansprüche 1 bis 10, dadurch gekennzeichnet, daß zum Verschließen nicht benützter Kabeleinführungsöffnungen (6) Flansche (10) vorgesehen sind, wobei jeder Flansch (10) so ausgebildet ist wie der Flansch (34) der Kabeleinführungsstutzen (7).

## Claims

1. Splice box for receiving splices of telecommunications cables, in particular of optical fibres or electric lines, comprising two, preferably identical half shells (1, 2) made of a rigid material, in particular a rigid plastic material, which may be assembled and connected to one another, wherein at least one through opening (3, 4, 5, 6) for cables is provided at each of the end faces (15, 16) of the splice box, and wherein seals (20, 30) are disposed between the half shells (1, 2), which seals (20, 30) are inserted in grooves (13, 14, 17, 18) in the opposing edges of the two half shells (1, 2), wherein two substantially elongated seals (20) are provided extending along the longitudinal edges (11, 12) and annular seals (40) are provided in the region of the through openings (3, 4, 5, 6), wherein the ends (22, 23, 80, 81) of the elongated seals (20), which are received in the grooves (13, 14) in the edges of the half shells (1, 2) which lie one on top of the other, in the region of the through openings (3, 4, 5, 6) have cross-sectionally enlarged heads (24, 25, 31, 32) which are received in corresponding widened portions of the grooves (13, 14, 17, 18), and wherein the ends (22, 23, 80, 81) of the elongated seals (20) are bridged by the annular seals (40) which are pressed by possibly split cable entry glands (7, 7'), characterized in that the ends of the grooves (13, 14) at the end faces (15, 16) of the half shells (1, 2) open next to the through openings (3, 4, 5, 6) and that the ends (22, 23, 80, 81) of the elongated seals (20, 30) are directed outwards and are pressed by the annular seals (40) against the end faces (15, 16) of the splice box which surround the through openings (3, 4, 5, 6).

2. Splice box according to claim 1, characterized in that provided between two adjacent through openings (3, 4, 5, 6) for cables which are disposed at an end face (15, 16) is a substantially U-shaped seal (30), the ends (80, 81) of which are directed outwards between the through openings (3, 4, 5, 6), that the ends (80, 81) of the seal (30) have cross-sectionally enlarged heads (31, 32) which are received in corresponding widened portions of the grooves (17, 18), and that the [ends) (80, 81) of the seal (30) are bridged by the annular seals (40), which are pressed by the cable entry glands (7, 8, 9) against the end face (15, 16) of the splice box which surrounds the through openings (3, 4, 5, 6), with outwardly directed ends (22, 23) of the elongated seals (20).

3. Splice box according to claim 1 or 2, characterized in that the flanges of the cable entry glands (7) facing the end faces (15, 16) have two concentric, circular ribs (38, 39), between which the annular seals (40) are received.

4. Splice box according to claim 3, characterized in that provided between the ribs (38, 39) is a further rib (46) having a smaller height and a circular shape, which presses from the outside against the annular seal (40).

5. Splice box according to one of claims 1 to 4, characterized in that provided on the face (37) of the cable entry gland (7) facing the splice box are preferably two lug-like projections (42) which penetrate corresponding, inwardly open recesses (51) in the seals (40) and engage into recesses (43) in the end faces (15, 16) of the splice box.

6. Splice box according to one of claims 1 to 5, characterized in that the outside of the heads (24, 25, 31, 32) of the seals (20, 30) has a protruding edge (28, 45).

7. Splice box according to one of claims 1 to 6, characterized in that the packing cords (21, 33) between the heads (24, 25, 31, 32) of the seals (20, 30) have a star-shaped cross-sectional shape circumscribed by curved lines.

8. Splice box according to one of claims 1 to 7, characterized in that, for connecting the half shells (1, 2) of the splice box, openings (56, 57, 58) penetrated by connection screws (69) are provided in the region of the edges of the half shells, nuts (59) being cast in one of the half shells (1, 2) and the connection screws (69), which are screwed into the cast-in nuts (59), being inserted through the openings (56, 57, 58) in the other half shell (2, 1).

9. Splice box according to claim 8, characterized in that the opening for the cast-in nut (59) is a blind hole, and that the opening (56, 57, 58) for the connection screw (69) is a through opening which is closable at the side remote from the other half shell by a sealing Plug (70).

10. Splice box according to one of claims 1 to 9, characterized in that all of the holes (56, 57, 58) for connection screws (69) are disposed outside of the seals (20, 30).

11. Splice box according to one of claims 1 to 10, characterized in that flanges (10) are provided for closing unused cable entry openings (6), each flange (10) being constructed in the same manner as the flange (34) of the cable entry glands (7).

## Revendications

1. Manchon d'accouplement pour recevoir des épissures de câbles de technique des communications, en particulier de guides d'ondes lumineuses, ou de lignes électriques, constitué de deux demi-coquilles (1, 2) en matière rigide, en particulier en matière synthétique rigide, de préférence identiques l'une à l'autre, pouvant être assemblées et pouvant être reliées l'une à l'autre, au moins une ouverture de passage (3, 4, 5, 6) pour des câbles étant prévue sur les faces frontales (15, 16) du manchon d'accouplement et des joints d'étanchéité (20, 30) étant disposés entre les demi-coquilles (1, 2), lesquels joints d'étanchéité (20, 30) sont logés dans des rainures (13, 14, 17, 18) dans les bords tournés l'un vers l'autre des deux demi-coquilles (1, 2), deux joints d'étanchéité essentiellement allongés (20) qui s'étendent le long des bords longitudinaux (11, 12) et, dans la zone des ouvertures de passage (3, 4, 5, 6), des joints d'étanchéité annulaires (40) étant prévus, les extrémités (22, 23, 80, 81) des joints d'étanchéité allongés (20) reçus dans les rainures (13, 14) dans les bords opposés l'un à l'autre des demi-coquilles (1, 2) présentant dans la zone des ouvertures de passage (3, 4, 5, 6) des têtes (24, 25, 31, 32) à section transversale élargie qui sont reçues dans des sections élargies correspondantes des rainures (13, 14, 17, 18) et les extrémités (22, 23, 80, 81) des joints d'étanchéité allongés (20) étant surmontées par les joints d'étanchéité annulaires (40) qui sont comprimés par des tubulures d'introduction de câbles (7, 7'), le cas échéant divisées,
caractérisé en ce que les extrémités des rainures (13, 14) aux surfaces frontales (15, 16) des demi-coquilles (1, 2) débouchent près des ouvertures de passage (3, 4, 5, 6) et en ce que les extrémités (22, 23, 80, 81) des joints d'étanchéité allongés (20, 30) sont dirigées vers l'extérieur et sont comprimées par les joints d'étanchéité annulaires (40) contre les surfaces frontales (15, 16) du manchon d'accouplement entourant les ouvertures de passage (3, 4, 5, 6).

2. Manchon d'accouplement selon la revendication 1,
caractérisé en ce que, entre deux ouvertures de passage (3, 4, 5, 6) pour câbles voisines disposées à une face frontale (15, 16) est prévu un joint d'étanchéité (30) essentiellement en forme de U dont les extrémités (80, 81) sont dirigées vers l'extérieur entre les ouvertures de passage (3, 4, 5, 6) que les extrémités (80, 81) du joint d'étanchéité (30) présentent des têtes (31, 32) à section transversale élargie qui sont reçues dans des sections élargies correspondantes des rainures (17, 18) et que les extrémités (80, 81) du joint d'étanchéité (30) sont surmontées par les joints d'étanchéité annulaires (40), qui sont comprimés par les tubulures d'introduction de câbles (7, 8, 9) contre la surface frontale (15, 16) du manchon de raccordement entourant les ouvertures de passage (3, 4, 5, 6), par des extrémités (22, 23) tournées vers l'extérieur des joints d'étanchéité allongés (20).

3. Manchon d'accouplement selon la revendication 1 ou 2,
caractérisé en ce que les collerettes des tubulures d'introduction de câbles (7) tournées vers les surfaces frontales (15, 16) présentent deux nervures circulaires (38, 39) concentriques l'une à l'autre, entre lesquelles sont reçus les joints d'étanchéité annulaires (40).

4. Manchon d'accouplement selon la revendication 3,
caractérisé en ce que, entre les nervures (38, 39), est prévue une autre rainure (46) de hauteur moindre et de forme orbiculaire qui presse de l'extérieur contre le joint d'étanchéité annulaire (40).

5. Manchon d'accouplement selon l'une des revendications 1 à 4,
caractérisé en ce que, à la surface (37) de la tubulure d'introduction de câbles (7) tournée vers le manchon d'accouplement, sont prévues de préférence deux saillies (42) à la manière de tenon qui viennent en prise dans des évidements (43) dans les surfaces frontales (15, 16) du manchon d'accouplement en traversant des ouvertures (51) correspondantes, ouvertes vers l'intérieur, dans les joints d'étanchéité (40).

6. Manchon d'accouplement selon l'une des revendications 1 à 5,
caractérisé en ce que les têtes (24, 25, 31, 32) des joints d'étanchéité (20, 30) présentent extérieurement un bord saillant (28, 45).

7. Manchon d'accouplement selon l'une des revendication 1 à 6,
caractérisé en ce que les profilés d'étanchement (21, 33) entre les têtes (24, 25, 31, 32) des joints d'étanchéité (20, 30) présentent une forme en étoile en section transversale, limitée par des lignes courbés.

8. Manchon d'accouplement selon l'une des revendications 1 à 7,
caractérisé en ce que, pour la liaison des demi-coquilles (1, 2) du manchon d'accouplement, sont prévues dans la zone des bords de celles-ci des ouvertures (56, 57, 58) traversées par des vis de liaison (69), des boulons (59) étant venus de fonderie dans l'une des demi-coquilles (1, 2) et les vis de liaison (69), qui sont vissées dans les boulons venus de fonderie, étant enfoncées à travers les ouvertures (56, 57, 58) de l'autre demi-coquille (2, 1).

9. Manchon d'accouplement selon la revendication 8,
caractérisé en ce que l'ouverture pour le boulon venu de fonderie (59) est un trou borgne et que l'ouverture (56, 57, 58) pour la vis de liaison (69) est une ouverture traversante qui peut être fermée, sur le côté écarté de l'autre demi-coquille, par un bouchon de fermeture (70).

10. Manchon d'accouplement selon l'une des revendications 1 à 9,
caractérisé en ce que tous les troncs (56, 57, 58) pour des vis de liaison (69) sont disposés en dehors des joints d'étanchéité (20, 30).

11. Manchon d'accouplement selon l'une des revendications 1 à 10,
caractérisé en ce que des flasques (10) sont prévus pour la fermeture d'ouvertures d'introduction de câbles (6) non utilisées, chaque flasque (10) étant conformé comme la collerette (34) de la tubulure d'introduction de câbles (7).
